Europäisches Patentamt

European Patent Office

Office européen des brevets

(19)

(11) **EP 1 477 933 A1**

(12) **EUROPEAN PATENT APPLICATION**
published in accordance with Art. 158(3) EPC

(43) Date of publication:
**17.11.2004 Bulletin 2004/47**

(51) Int Cl.⁷: **G06T 7/00**, H04N 5/76

(21) Application number: **03731840.9**

(86) International application number:
**PCT/JP2003/000709**

(22) Date of filing: **27.01.2003**

(87) International publication number:
**WO 2003/063082 (31.07.2003 Gazette 2003/31)**

(84) Designated Contracting States:
**AT BE BG CH CY CZ DE DK EE ES FI FR GB GR
HU IE IT LI LU MC NL PT SE SI SK TR**
Designated Extension States:
**AL LT LV MK RO**

(30) Priority: **25.01.2002 JP 2002017625**

(71) Applicants:
• **Satake Corporation
Chiyoda-ku, Tokyo 101-0021 (JP)**

• **KODAMA, Mei
Hiroshima 732-0016 (JP)**

(72) Inventor: **KODAMA, Mei
Hiroshima-shi, Hiroshima 732-0016 (JP)**

(74) Representative: **Casalonga, Axel
Bureau D.A. Casalonga - Josse,
Paul-Heyse-Strasse 33
80336 München (DE)**

(54) **MOVING PICTURE SEARCH APPARATUS**

(57) A moving picture search system comprises, for searching, a moving picture input unit for search; and a feature amount calculation unit including a local region extraction unit, a signal extraction unit and a feature amount table creation unit; and, for creating a database, a moving picture input unit for a database; a moving picture database; a feature amount calculation unit including a local region extraction unit, a signal extraction unit and a feature amount table creation unit; a table database registration unit; a table database; a search processing unit including a database read out unit, a matching unit, and a matching result judgment unit; a moving picture database read out unit; and a search result output unit. By calculating the feature amount of the moving picture, it is possible to perform a high-speed moving picture search with a small amount of information.

**Fig. 10**

EP 1 477 933 A1

**EP 1 477 933 A1**

**Description**

The present invention relates to a method for effectively searching the moving picture information in the multimedia information utilizing environments, and it also relates to a system using the same.

As a conventional moving picture search method, there was a method wherein entire pixels or picture elements per picture frame unit are used. With this method using the entire pixels, it is impossible to perform an effective searching of the moving picture because the amount of information of the moving picture to be calculated and processed is enormous.

There was another conventional method wherein a still picture is searched and the feature amount such as brightness value and dispersion value per frame is used. This method is applicable to the still picture. If this method is applied to the moving picture, it is necessary to conduct the per-frame comparison and the dynamic features with respect to time of the moving picture cannot be used.

In the case where the feature amount of the picture in the conventional still picture matching is applied to the moving picture search and the feature amount which is calculated from the entirety of the picture is used, there are problems in that it takes a substantive and considerable time to process the enormous moving picture information and it is impossible to search such a scene of the moving picture which has less variation. Further, with this method, it is not possible to capture the dynamic features with respect to time that are characteristics of the moving picture. Still further, since the feature amount such as the average brightness value and the dispersion value for each frame is dependent on the input data, it is necessary to change, in accordance with the input data, a threshold value which becomes a reference for the matching so as to achieve an appropriate matching, and the processes are complicated.

As explained above, the conventional picture matching method is a search method which is based on entirety of the picture and has a problem such that the amount of calculation process is large which problem is to be solved. The present invention is aimed at providing a high-speed moving picture search method with a small amount of information by calculating the feature amount of the moving picture.

Further, in this invention, as compared to the conventional method in which the average brightness value and the dispersion value per frame are used, it is easy to establish a threshold value without relying on the input data by using the means for calculating the feature amount of the moving picture as a local region unit and the means for calculating the histogram of the local region feature amount of the moving picture and then calculating the correlation value before and after the frame.

According to the invention, there is provided a method for searching moving pictures and also a system using the same, comprising:

for searching,
a moving picture input unit for inputting the moving picture data for search;
a feature amount calculation unit including:

a local region extracting unit for extracting one or more square or any given shape local regions for calculating the feature amount with respect to the input moving picture data for search;
a signal extraction unit for extracting or conversion-extracting picture signal components such as brightness signals, color difference signals, each RGB color space component, each XYZ color space component, each uniform color space component, and each Munsell color space component of the feature amount calculation region extracted from the input moving picture for search; and
a feature amount table creation unit for creating a feature amount table used for the searching process, from the feature amount calculated based on the input moving picture for search;

for creating a database,
a moving picture input unit for inputting the moving picture data for database;
a moving picture database registration unit for registering the input moving picture data for database in a moving picture database;
a database in which the input moving picture data for database is registered;
a feature amount calculation unit including:

a local region extracting unit for extracting one or more square or any given shape local regions for calculating the feature amount with respect to the input moving picture data for database;
a signal extraction unit for extracting or conversion-extracting picture signal components such as brightness signals, color difference signals, each RGB color space component, each XYZ color space component, each uniform color space component, and each Munsell color space component of the feature amount calculation region extracted from the input moving picture for database; and

a feature amount table creation unit for creating a feature amount table used for the searching process, from the feature amount calculated based on the input moving picture for database;

a table database registration unit for registering the created feature amount table for database in a feature amount table database;
a table database in which the created feature amount table for database is registered;
a search unit including:

a table database read out unit for reading out the database feature amount table used for search process, which table was processed by the feature amount calculation unit on the input moving picture for search and is used for the search process;
a matching unit for extracting a feature amount used for matching from the feature amount table created based on the input moving picture for search and the registered feature amount table in the feature amount table for database, outputting the extracted result to a matching result judgment unit, storing the matching result from the matching result judgment unit, and after the completion of the matching process, outputting the matching result to a moving picture database read out unit; and
a matching result judgment unit for performing judgment with respect to a threshold value, based on the feature amount of the moving picture for search and the feature amount of the moving picture for database extracted by the matching unit, and outputting the matching result to the matching unit;

a moving picture database read out unit for receiving the matching result from the matching result judgment unit, and reading out a search result moving picture corresponding to the matching result, from the moving picture database; and
a search result output unit for outputting the search result moving picture read out by the moving picture database read out unit.

With this moving picture search method and system, a local region is extracted from the picture frame and a histogram of the brightness information is calculated from the extracted local region. Then, the calculated histogram is compared before and after the frame, and the correlation value thereof is obtained. It is possible to achieve a further high-speed moving picture matching by grouping the above correlation values with respect to a certain threshold value.
Further, as compared to the average brightness value and the dispersion value of each frame, the correlation value does not depend upon the input data and is not necessary to be varied with respect to the threshold value input when it is grouped. As a consequence, it is possible to establish the threshold value appropriately by using the correlation value as the feature amount. Further, by using the grouped feature amount as the search parameter, it is possible to control or limit the number of parameters which are used for searching the moving picture scenes and, thus, the time required for the matching process can be effectively shortened.

Fig. 1 is a block diagram showing the basic principle of the present invention;
Fig. 2 is a schematic block diagram of a hardware structure using a single terminal unit for realizing the present invention;
Fig. 3 is a schematic block diagram of a hardware structure using a plurality of terminal units for realizing the present invention;
Fig. 4 is a diagram showing local regions of an n-frame and an (n+1) frame;
Fig. 5 is a diagram showing one or more local regions where the feature amount per local region unit is calculated for the moving picture;
Fig. 6 is a diagram for explaining the way how the local region is actually extracted;
Fig. 7 is a diagram for explaining the way how the color space signal is extracted;
Fig. 8 is a diagram for explaining the grouping of the correlation value as the time relation feature amount, calculated from the signal information;
Fig. 9 is a diagram for explaining the creation process of the feature amount table;
Fig. 10 is a block diagram showing the search processes in the present invention;
Fig. 11 is a flow chart showing the procedures at the search data input side and the procedures of matching process;
Fig. 12 is a flow chart showing the procedures at the database side that deals with the feature amount data for comparison;
Fig. 13 is a block diagram showing the embodiment in which the local region extraction process and the signal extraction process are changed in their order;
Fig. 14 is a flow chart showing the procedures at the search data input side and the procedures of matching process; and

Fig. 15 is a flow chart showing the procedures at the database side that deals with the feature amount data for comparison.

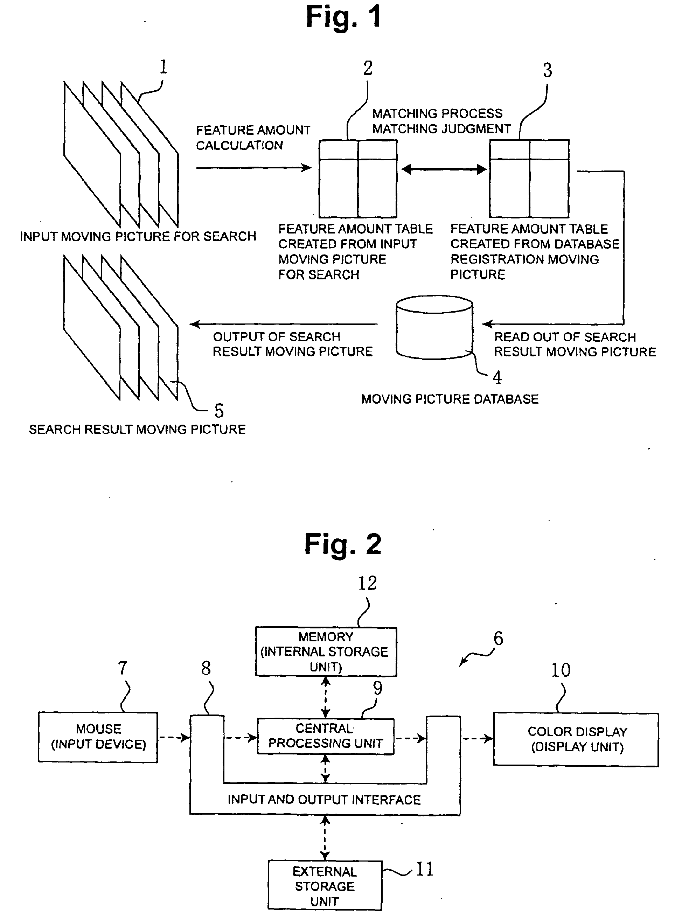

Now, illustrative embodiments of the invention will be explained with reference to the accompanying drawings. First, we refer to Fig. 1 which is a block diagram showing the fundamental principle of the present invention.

From the moving pictures 1 input by an operator, the feature amount is calculated and the feature amount table 2 is created. In relation to the moving pictures for database, a plurality of feature amount tables 3 for registering are created in advance and stored. Collation (matching process or matching judgment) between the created feature amount table 2 and the registered feature amount table 3 is performed. If the feature amount table 2 corresponds to the feature amount table 3, the search result list is sent to the moving picture database 4. Based on this list, the moving picture is output from the moving picture database 4 whereby the desired moving picture 5 is obtained.

Next, with reference to Fig. 2, a hardware construction consisting of a single terminal 6 is explained. Moving pictures for search are stored in an external storage unit 11 through an input and output interface 8. The moving picture information is specified by a mouse (input device) 7, and the feature amount thereof is calculated by a memory (internal storage unit) 12 and a central processing unit 9. The obtained feature amount data is stored in the internal storage unit 12 or the external storage unit 11 through the input and output interface 8.

On the other hand, moving pictures for database are stored in the external storage unit 11 through the input and output interface 8, and the feature amount thereof is calculated by the memory (internal storage unit) 12 and the central processing unit 9. This calculated feature amount is stored in the internal storage unit 12 or the external storage unit 11 through the input and output interface 8.

The calculated data is read out to the memory 12 from the external storage unit 11. The central processing unit 9 performs the search process and the search result is forwarded to the internal storage unit 12 or the external storage unit 11.

The central processing unit 9 reads out the search result picture list from the internal storage unit 12 or the external storage unit 11 through the input and output interface 8, and the search result picture is output to the external storage unit 11 or the display unit 10 through the input and output interface 8.

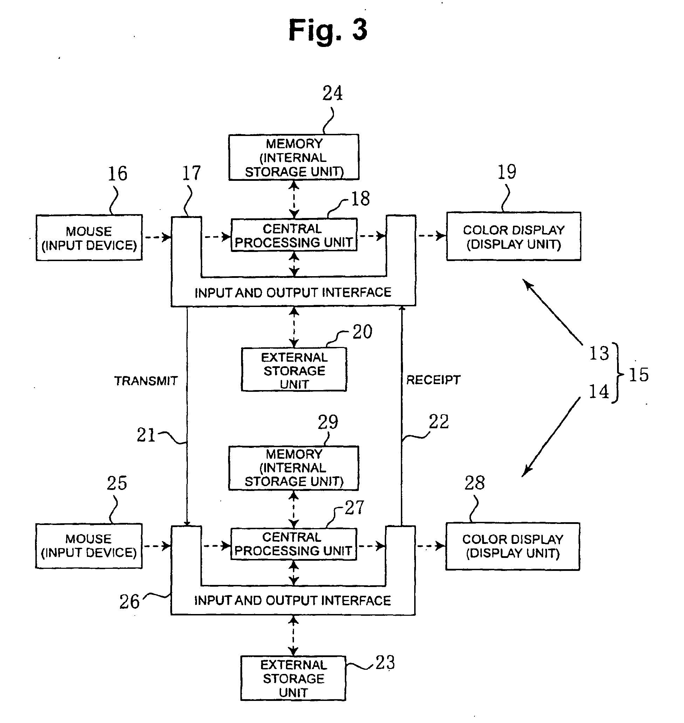

Next, with reference to Fig. 3, a hardware construction having a plurality of terminals according to the present invention will be explained.

In relation to the moving picture for search, the moving picture information stored in an external storage unit 20 or the moving picture information stored in an external storage unit 23 at the server side 14 which is connected to a network (numerals 21, 22) through an input and output interface 17 is specified by a mouse (input device) 16 at the client side 13 through the input and output interface 17. A memory (internal storage unit) 24 and a central processing unit 18 at the client side 13 calculate the feature amount of the specified moving picture information. The calculated feature amount data is stored in the internal storage unit 24 or the external storage unit 20 through the input and output interface 17. Or, the calculated feature amount data is transmitted to the server side 14 and is stored in an internal storage unit 29 or the external storage unit 23 through an input and output interface 26 at the server side 14.

On the other hand, in relation to the moving picture for database, the moving picture information stored in the external storage unit 23 is read out to the memory (internal storage unit) 29 through the input and output interface 26 at the server side 14, and the feature amount thereof is calculated by the memory (internal storage unit) 29 and the central processing unit 27. The calculated feature amount data is stored in the internal storage unit 29 or the external storage unit 23 through the input and output interface.

The calculated data is read out to the memory 29 from the external storage unit 23 and, then, the searching process is conducted by the central processing unit 27. The search result is forwarded to the internal storage unit 29 or the external storage unit 23 through the input and output interface 26.

The central processing unit 27 reads out the search result picture list from the internal storage unit 29 or the external storage unit 23 through the input and output interface 26, outputs the search result picture to the external storage unit 23 through the input and output interface 26, and transmits (numeral 22) the search result picture to the terminal at the client side 13 through the input and output interface 26. The search result picture is stored in the external storage unit 20 or it is output to a display unit 19 at the terminal at the client side 13.

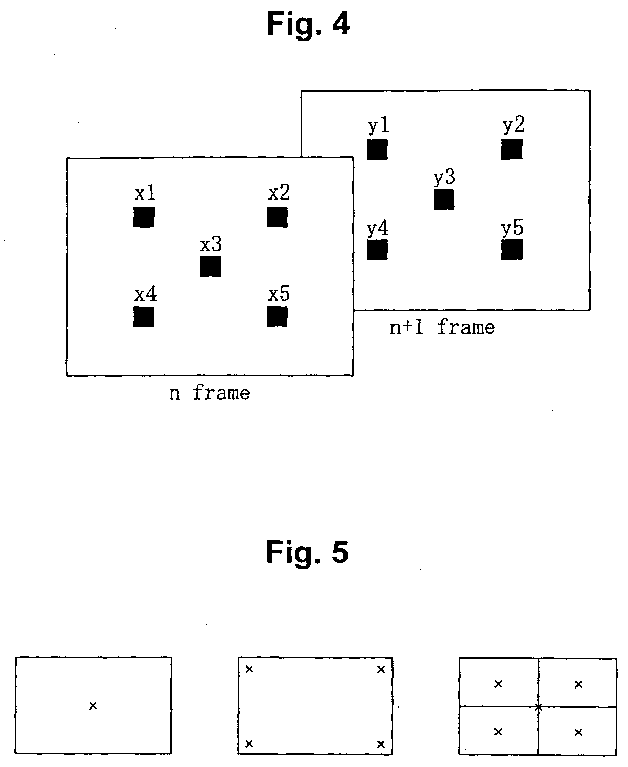

Figs. 4 - 7 are schematic diagrams for explaining the calculation of the feature amount which is the main feature of the present invention.

First, the extraction of the local region is explained. At the searching of the moving picture, local regions are extracted within a picture frame, and histogram of the brightness information is calculated from the local regions. The calculated histograms are compared with each other before and after the frame, and the correlation value thereof is obtained. The grouping of the correlation values with respect to a certain threshold value makes it possible to realize a high-speed matching of the moving pictures. The correlation value does not depend on the input as compared to the average value of the brightness value or the dispersion value, and it is not necessary to change the threshold value with respect to the input when the correlation values are grouped. As a result, the effective search can be realized by using the correlation value as the feature amount. In this invention, since the change in histogram for the moving picture is obtained before and after the frame in terms of time, it is possible to search such scene as a minute variation scene, a cameral panning scene or a camera zooming scene by using the histogram correlation values of the local regions, which scene cannot be searched based on the feature amount from the entire picture heretofore.

Fig. 4 shows an n-frame picture and an (n+1)-frame picture. For example, histograms of brightness values between the local regions, that is, between the local regions x1, x2, x3, x4, x5 and the local regions y1, y2, y3, y4, y5 within the picture are calculated and the correlation values thereof are obtained. By repeating this procedure, the correlation value distribution is calculated from the input moving picture information. The obtained correlation value distribution is classified into two groups with respect to a certain threshold value using the continuity in terms of time, and the structure number is used for the matching parameter. The moving picture search method and system utilizing this matching parameter is superior in the processing speed and the search precision.

Fig. 5 shows exemplary local regions wherein one or more feature amounts are calculated for the local region units of the moving picture. The feature amount can be calculated for the local region unit without relying on the vertical and horizontal ratio of the picture frame.

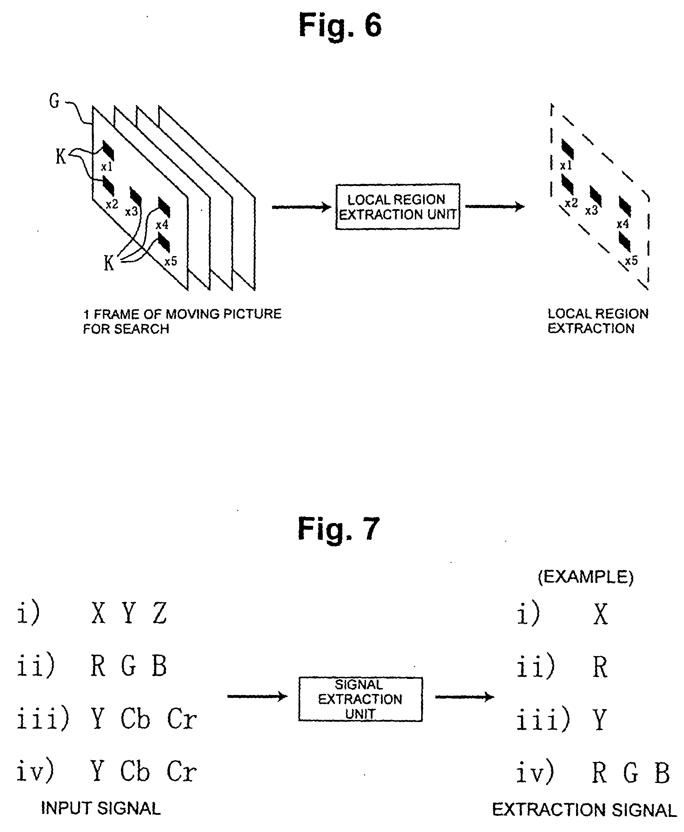

Fig. 6 is a diagram for explaining the actual extraction of the local regions. In the case where the local regions K are extracted from the entire region G of the moving picture, for example, only one local region (x3 only) consisting of $8 \times 8$ pixel block or five, for example, local regions (x1 - x5) may be extracted. In the illustrated embodiment, the shape of the pixel block is square. However, the shape of the pixel block is not limitative to square. The shape of N-number pixel blocks may be any given shape such as circle or polygonal. Further, the locations of the five local regions in the illustration may be moved or changed.

With reference to Fig. 7, extraction of the color space signal is explained. Color space signals (XYZ, RGB, YCbCr, CIE L*a*b*, CIE L*u*v*, CIE UCS, etc.) are extracted for the moving pictures (pixel blocks) at the local regions in Fig. 6. All of the XYZ, RGB, YCbCr, CIE L*a*b*, CIE L*u*v*, CIE UCS, etc. or any one component therein may be extracted selectively. Further, the color space signal may be extracted after, for example, YCbCr color space has been once converted to RGB color space signal.

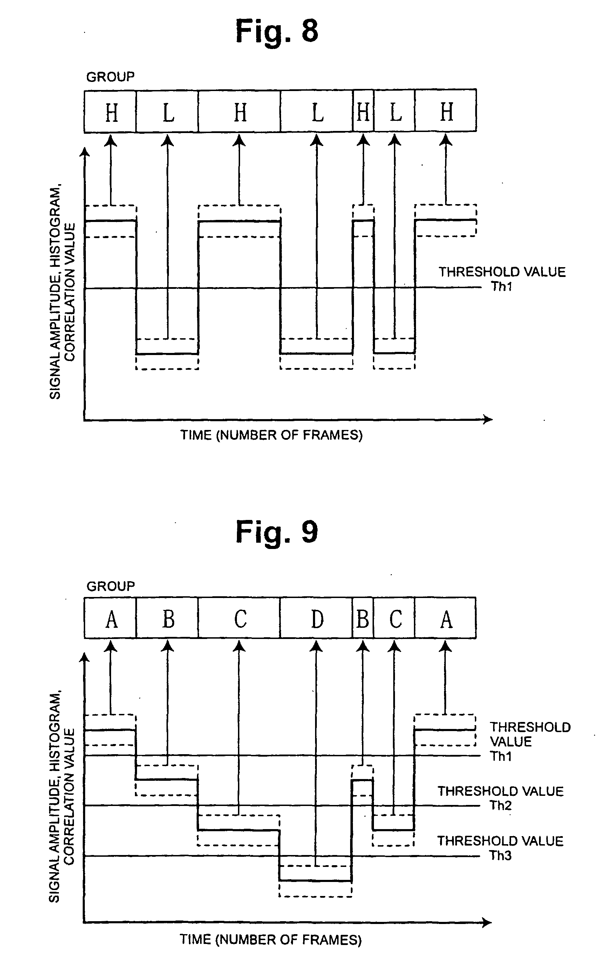

Fig. 8 is a diagram showing how the feature amount table is created. The feature amounts such as the signal, histogram, correlation value and their grouped processed value calculated from the input moving picture information are subjected to a grouping process using a certain threshold value. The feature amount table is created from the time duration (number of frames) of the groups, the total number of groups, the threshold values and so on.

Fig. 9 is a diagram in which the feature amount table of Fig. 8 is grouped using a plurality of threshold values. Grouping into two or more groups using two or more threshold values (Th1, Th2, and Th3 in Fig. 9) is performed, and the feature amount table is created from the time duration (number of frames) of the groups, the total number of groups and the threshold values and so on.

Collation of the feature amount information of the input moving picture for search with the feature amount information corresponding thereto extracted from the database for comparison is performed by the following determination formula (1) or (2).

$$|\text{Input moving picture H group length - Database H group length}| \leqq \text{Th} \tag{1}$$

$$\text{Th1} \leqq (\text{Input moving picture H group length - Database H group length}) \leqq \text{Ths2} \tag{2}$$

With this determination formula, a search result list is output and, based on the list, the desired moving picture is extracted.

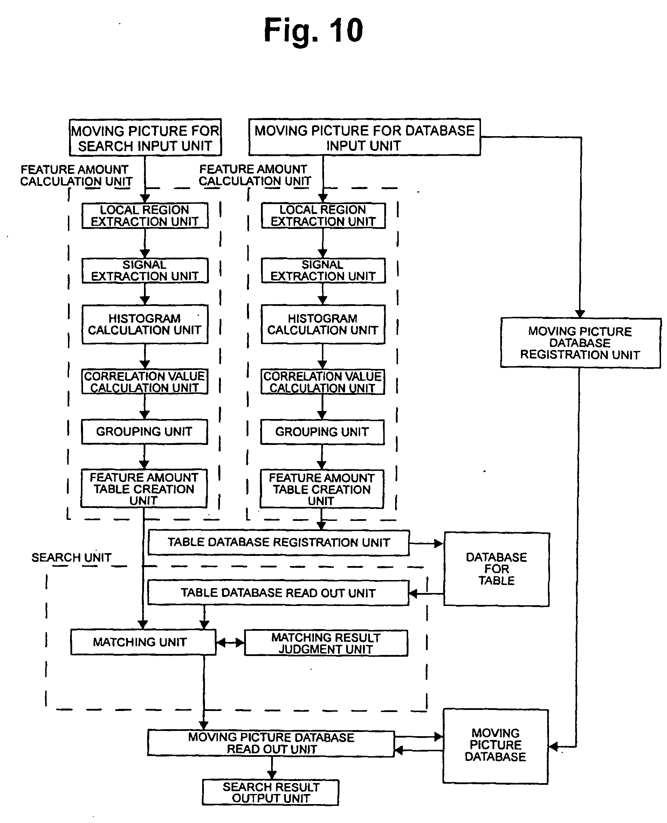

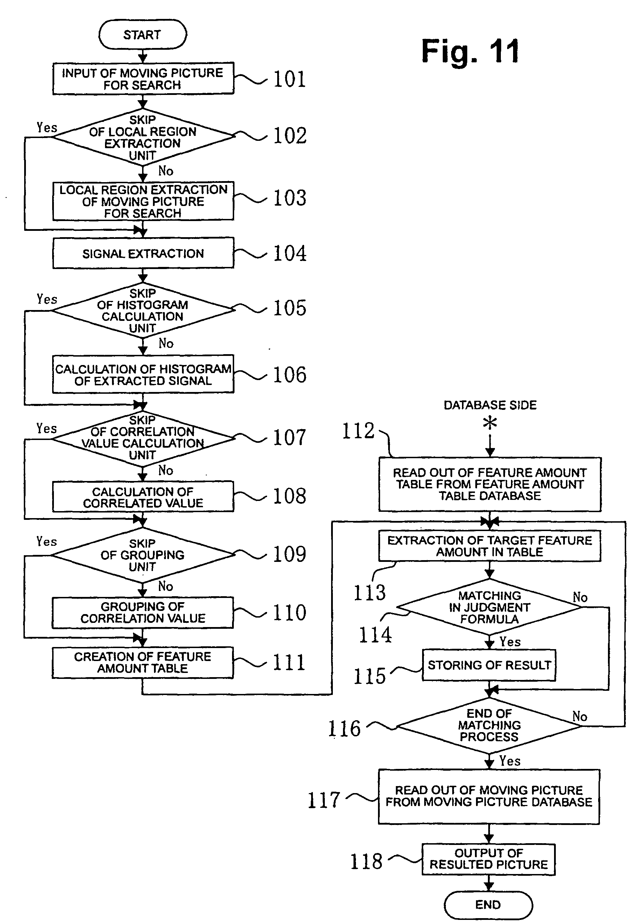

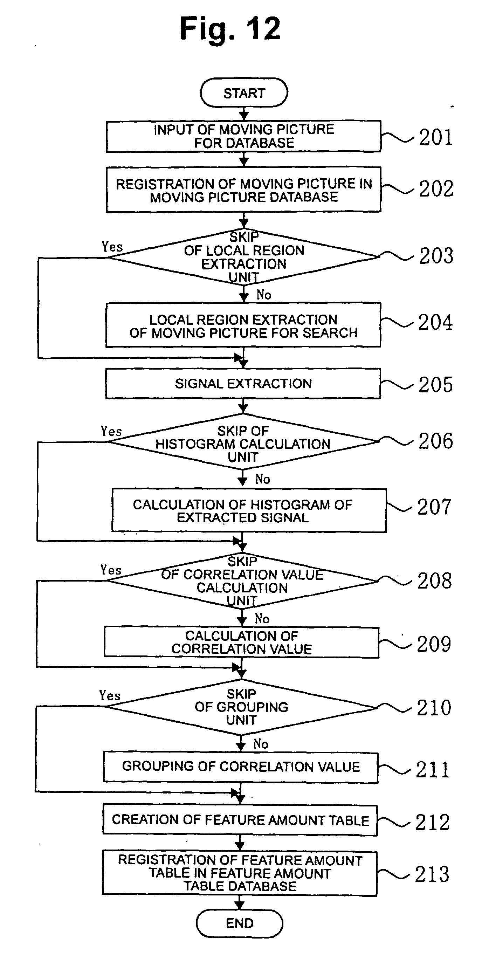

Next, the procedures of the embodiment will be explained with reference to Figs. 10 - 12. Fig. 10 is a block diagram showing the search process according to the invention, Fig. 11 is a flow chart showing the process steps at the input side and the process steps of the matching process, and Fig. 12 is a flow chart showing the process steps at the database side dealing with the feature amount information for the comparison.

At a step 101, the moving picture information for search is input. At a step 102, it is determined whether a part of the moving picture frames of the moving picture information for search is extracted as a local region. In the case where the extraction of the local region is skipped (non-extraction), the procedure goes to a step 104. If the local region extraction is not skipped (extraction), the procedure goes to a step 103.

In the local region extraction at the step 103, for the calculation of the feature amount with respect to the input moving picture information for search, in order to extract a part of the moving picture frames as the local region, one or more square or any given shape local regions are extracted.

At the step 104, the brightness signal, the color difference signal, the RGB color space components of the local region extracted at the step 103 or the entirety of the input moving picture information are extracted. At a step 105, it is determined whether the histogram of the signal extracted from the input moving picture information is calculated or not. If the calculation of the histogram is skipped (non-calculation), the procedure goes to a step 107. If the calculation is not skipped (calculation), the procedure goes to a step 106.

At the step 106, the histogram of the signal extracted at the step 104 is calculated. At the step 107, it is determined whether the correlation value of the signal extracted at the step 104 or the histogram calculated at the step 106 is calculated. If the calculation of the correlation value is skipped (non-calculation), the procedure goes to a step 109. If such calculation is not skipped (calculation), the procedure goes to a step 108. The correlation value is calculated between the frames positioned side by side or between between any given frames along the time lapse.

At a step 109, it is determined whether the grouping process is performed on the correlation values obtained at the step 109 or the histogram at the step 106 or not. If the grouping process is skipped (non-grouping), the procedure goes to a step 111. If such grouping is done (grouping), the procedure goes to a step 110.

At the step 110, the grouping as the unit of one or more frames in terms of time is performed on the correlation values obtained at the step 108 using a certain threshold value and, then, the feature amount such as the number of frames and the number of groups is calculated.

At the step 111, a feature amount table used for the search process is created from the feature amount calculated based on the input moving picture information for search. At a step 112, a feature amount table for database which table is for search process is read out. At a step 113, the feature amount used for the matching process is extracted from the feature amount table stored in the database based on the feature amount table for search process created at the step 111.

At a step 114, the matching process is performed between the feature amount of the moving picture for search and the feature amount of the database moving picture. If both the feature amounts match, the procedure goes to a step 115. If not, the procedure goes to a step 116. At the step 115, the matching result is stored. At the step 116, it is determined whether the matching process is stopped or not. If the matching process is to be stopped, the procedure goes to a step 117. If not, the procedure returns to the step 113.

At the step 117, upon receipt of the matching result, the search result moving picture corresponding to the matching result is read out from the moving picture database. At a step 118, the search result moving picture read out by the read out process unit is output. In Fig. 11, there is no case where all the four steps 102, 105, 107 and 109 are performed.

Next, with reference to Fig. 12, the procedures at the database side will be explained. At a step 201, the moving picture information to be stored in the database is input. At a step 202, the input moving picture information is stored in the moving picture database. At a step 203, it is decided whether the extraction of a part of the frames of the moving pictures as local regions is effected on the moving picture information to be stored in the database or not. If such extraction of the local region is skipped (non-extraction), the procedure goes to a step 205. If not skipped (extraction), the procedure goes to a step 204.

In the local region extraction performed in the step 204, in order to calculate the feature amount with respect to the moving picture information for database and to extract portions of the frames of the moving pictures as the local regions, one or more square or any given shape local regions are extracted.

At the step 205, the brightness signals, the color difference signals, or RGB color space components and so on are extracted from the local region extracted at the step 204 or the entirety of the moving picture information for database. At a step 206, it is determined whether the histogram of the signals extracted from the moving picture information for database is calculated or not. If the calculation of the histogram is skipped (non-calculation), the procedure goes to a step 208. If not (calculation), the procedure goes to a step 207.

At the step 207, the histogram of the signal extracted at the step 205 is calculated. At the step 208, it is determined whether the correlation value of the signal extracted at the step 205 or the histogram calculated at the step 207 is calculated or not. If the calculation of the correlation value is skipped (non-calculation), the procedure goes to a step 210, whereas, if not (calculation), the procedure goes to a step 209. At the step 209, the correlation value between the frames positioned side by side or between between any given frames along the lapse of time is calculated.

At the step 210, it is decided as to whether the grouping process on the correlation values calculated at the step 209 or the histograms calculated at the step 207 is performed or not. If the grouping process is skipped (non-grouping), the procedure goes to a step 212. If not skipped (grouped), the procedure goes to a step 211.

At the step 211, the grouping as the unit of one or more frames in terms of time is performed on the correlation values obtained at the step 209 using a certain threshold value and, then, the feature amount such as the number of frames and the number of groups is calculated.

At the step 212, a feature amount table to be used for the search process is created from the feature amount calculated based on the database registration moving picture information. At a step 213, the feature amount table for the database to be used for the search process is registered in the feature amount table database. It is to be noted that, in Fig. 12, there is no case where the four skip steps 203, 206, 208 and 210 are all performed.

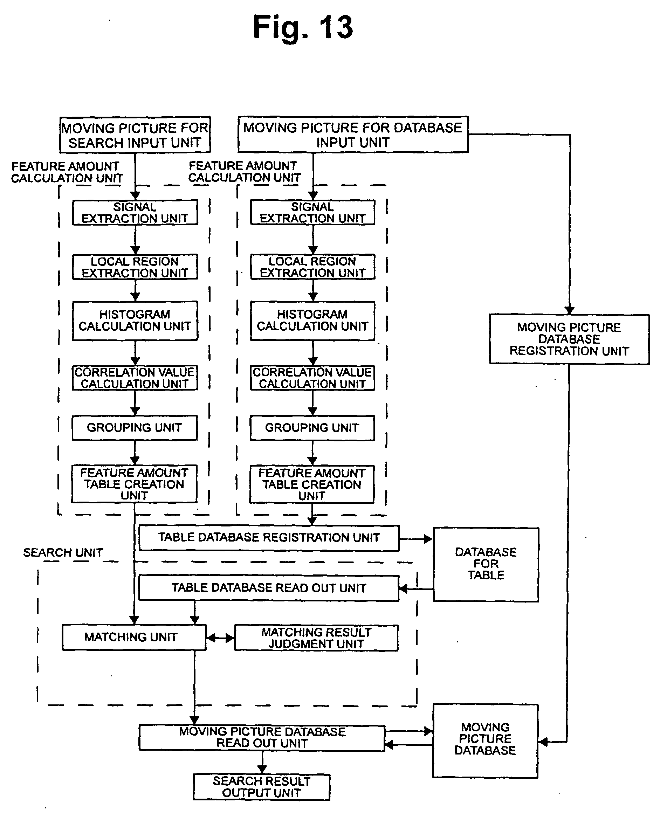

Next, by referring to Figs. 13 - 15, another embodiment of the present invention wherein the local region extraction process and the signal extraction process are changed in their order as compared to the previous embodiment will be explained.

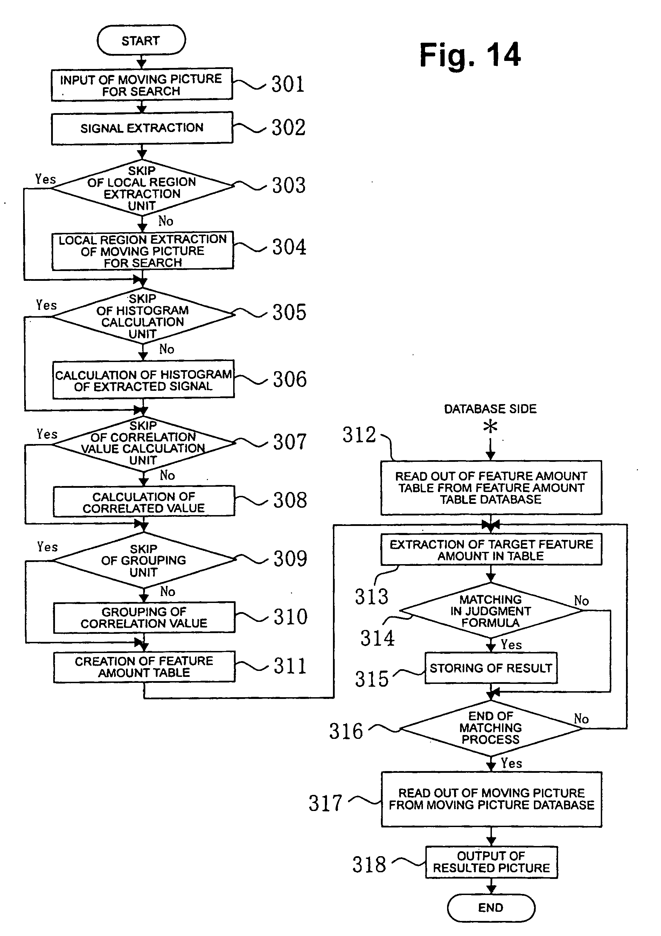

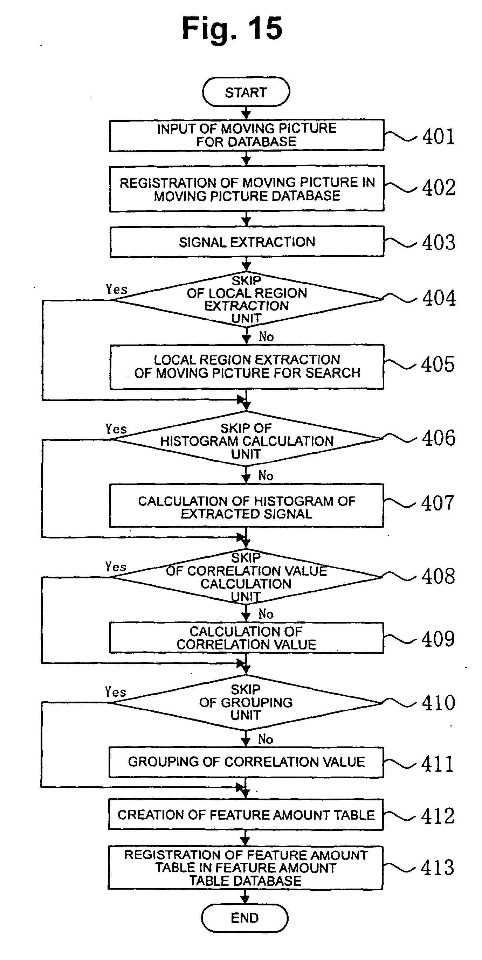

Fig. 13 is a block diagram showing the search processes for the embodiment in which the local region extraction process and the signal extraction process are changed in their order. Fig. 14 is a flow chart showing the processes at the input side of the information for search and the processes of the matching. Fig. 15 is a flow chart showing the processes at the database side dealing with the feature amount information for comparison. With reference to Fig. 14, the processes at the input side are explained. At a step 301, the moving picture information for search is input. At a step 302, the brightness signals, the color difference signals, and/or the RGB color space components and so on with respect to the input moving picture information for search are extracted. At a step 303, it is determined whether the extraction of a part of the frame of the input moving picture for search as the local region is performed or not. If the local region extraction is skipped (non-extraction), the procedure goes to a step 305. If not skipped (extraction), the procedure goes to a step 304.

In the local region extraction at the step 304, for calculating the feature amount with respect to the input moving picture information for search, in order to extract parts of the moving picture frames as the local regions, one or more square or any given shape local regions are extracted.

At the step 305, it is determined whether the calculation of histogram of the extracted signals such as the brightness signal, the color difference signal, and the RGB color space components of the local region extracted at the step 304 or of the entirety of the moving picture information of search is conducted or not. If such calculation of the histogram is skipped (non-calculation), the procedure goes to a step 307. If not skipped (calculation), the procedure goes to a step 306.

At the step 306, the histogram of the signal extracted at the step 304 is calculated. At the step 307, it is determined whether the correlation value of the signal extracted at the step 304 or the histogram calculated at the step 306 is calculated or not. The correlation value is calculated between the frames positioned side by side or between any given frames along the lapse of time. If the calculation of the correlation value is skipped (non-calculation), the procedure goes to a step 309. If not skipped (calculation), the procedure goes to a step 308.

At the step 309, it is determined whether the grouping of the correlation values obtained at the step 308 is performed or not. If such grouping is skipped (non-grouping), the procedure goes to a step 311. If not skipped (grouping), the procedure goes to a step 310.

At the step 310, the grouping as the unit of one or more frames in terms of time is performed on the correlation values obtained at the step 308 using a certain threshold value and, then, the feature amount such as the number of frames and the number of groups is obtained.

At the step 311, a feature amount table to be used for search process is created from the feature amount calculated based on the input moving picture information for search. At a step 312, a feature amount table for database which table is used for search process is read out. At a step 313, the feature amount used for the matching process is extracted from the feature amount table stored in the database based on the feature amount table for search process created at the step 311.

At a step 314, the matching between the feature amount of the moving picture for search and the feature amount of the moving picture in the database. If both the feature amounts match with each other, the procedure goes to a step 315. If not, the procedure goes to a step 316. At the step 315, the matching result is stored. At the step 316, it is determined whether the matching process is stopped or not. If yes, the procedure goes to a step 317, whereas, if not, the procedure goes to a step 313.

At the step 317, upon receipt of the matching result, the search result moving picture corresponding to the matching result is read out from the moving picture database. At a step 318, the search result moving picture read out by the read out unit is output. It should be noted that there is no case where the four skip steps 303, 305, 307 and 309 in Fig. 14 are all performed.

Next, with reference to Fig. 15, the procedures at the database side will be explained.

At a step 401, the moving picture information to be registered in the database is input. At a step 402, the input database registration moving picture information is registered in the moving picture database. At a step 403, the brightness signals, the color difference signals, the RGB color space components, etc. are extracted from the input database registration moving picture information.

At a step 404, as to the database registration moving picture information, it is determined whether the extraction of a part of the moving frame as a local region is performed or not. If such extraction of the local region is skipped (non-extraction), the procedure goes to a step 406. If not skipped (extraction), the procedure goes to a step 405.

In the local region extraction performed in the step 405, in order to calculate the feature amount with respect to the database registration moving picture information and to extract portions of the frames of the moving pictures as the local regions, one or more square or any given shape local regions are extracted.

At the step 406, it is determined whether the histograms such as the brightness signals, the color difference signals, the RGB color space components, etc. of the local region extracted at the step 405 or of the entirety of the database registration moving picture information are calculated or not. If the calculation of the histograms is skipped (non-calculation), the procedure goes to a step 408. If not skipped (calculation), the procedure goes to a step 407.

At the step 407, the histogram of the signal extracted at the step 405 is calculated. At the step 408, it is decided as to whether the correlation value of the signal extracted at the step 405 or the histogram calculated at the step 407 is calculated or not. If the calculation of the histogram is skipped (non-calculation), the procedure goes to a step 410. If not skipped (calculation), the procedure goes to a step 411. The correlation is calculated between the frames positioned side by side or between any given frames along the lapse of time.

At the step 410, it is determined as to whether the grouping with respect to the correlation values obtained at the step 409 is effected or not. If such grouping is skipped (non-grouping), the procedure goes to a step 412. If not skipped (grouping), the procedure goes to a step 411.

At the step 411, the grouping as the unit of one or more frames in terms of time is performed on the correlation values obtained at the step 409 using a certain threshold value and, then, the feature amount such as the number of frames and the number of groups is obtained.

At the step 412, a feature amount table used for the search process is created based on the feature amounts calculated based on the database registration moving picture information. At a step 413, the feature amount table for database used for the search process is registered in the feature amount table database. It should be noted that there is no case where the four skip steps 404, 406, 408 and 410 in Fig. 15 are all performed.

As has been described hereinabove, a method for searching moving pictures and a system using the same according to the present invention comprises:

for searching,
a moving picture input unit for inputting the moving picture data for search;
a feature amount calculation unit including:

> a local region extracting unit for extracting one or more square or any given shape local regions for calculating the feature amount with respect to the input moving picture data for search;
> a signal extraction unit for extracting or conversion-extracting picture signal components such as brightness signals, color difference signals, each RGB color space component, each XYZ color space component, each uniform color space component, and each Munsell color space component of the feature amount calculation region extracted from the input moving picture for search; and
> a feature amount table creation unit for creating a feature amount table used for the searching process, from the feature amount calculated based on the input moving picture for search;

for creating a database,
a moving picture input unit for inputting the moving picture data for database;
a moving picture database registration unit for registering the input moving picture data for database in a moving picture database;
a database in which the input moving picture data for database is registered;
a feature amount calculation unit including:

> a local region extracting unit for extracting one or more square or any given shape local regions for calculating the feature amount with respect to the input moving picture data for database;
> a signal extraction unit for extracting or conversion-extracting picture signal components such as brightness signals, color difference signals, each RGB color space component, each XYZ color space component, each uniform color space component, and each Munsell color space component of the feature amount calculation region extracted from the input moving picture for database; and
> a feature amount table creation unit for creating a feature amount table used for the searching process, from the feature amount calculated based on the input moving picture for database;

a table database registration unit for registering the created feature amount table for database in a feature amount table database;
a table database in which the created feature amount table for database is registered;
a search unit including:

a table database read out unit for reading out the database feature amount table used for search process, which table was processed by the feature amount calculation unit on the input moving picture for search and is used for the search process;

a matching unit for extracting a feature amount used for matching from the feature amount table created based on the input moving picture for search and the registered feature amount table in the feature amount table for database, outputting the extracted result to a matching result judgment unit, storing the matching result from the matching result judgment unit, and after the completion of the matching process, outputting the matching result to a moving picture database read out unit; and

a matching result judgment unit for performing judgment with respect to a threshold value, based on the feature amount of the moving picture for search and the feature amount of the moving picture for database extracted by the matching unit, and outputting the matching result to the matching unit;

a moving picture database read out unit for receiving the matching result from the matching result judgment unit, and reading out a search result moving picture corresponding to the matching result, from the moving picture database; and

a search result output unit for outputting the search result moving picture read out by the moving picture database read out unit.

With this moving picture search method and system, a local region is extracted from the picture frame and a histogram of the brightness information is calculated from the extracted local region. Then, the calculated histogram is compared before and after the frame, and the correlation value thereof is obtained. It is possible to achieve a further high-speed moving picture matching by grouping the above correlation values with respect to a certain threshold value.

Further, as compared to the average brightness value and the dispersion value of each frame, the correlation value does not rely on the input data and is not necessary to be varied with respect to the threshold value input when it is grouped. As a consequent, it is possible to establish the threshold value appropriately by using the correlation value as the feature amount. Further, by using the grouped feature amount as the search parameter, it is possible to control or limit the number of parameters which are used for searching the moving picture scenes and, thus, the time required for the matching process can be effectively shortened.

## Claims

1.  A system for searching moving pictures comprising:

for searching,
a moving picture input unit for inputting moving picture data for search;
a feature amount calculation unit including:

a local region extracting unit for extracting one or more square or any given shape local regions for calculating a feature amount with respect to the input moving picture for search;
a signal extraction unit for extracting or conversion-extracting picture signal components such as brightness signals, color difference signals, each RGB color space component, each XYZ color space component, each uniform color space component, and each Munsell color space component of the feature amount calculation region extracted from the input moving picture for search; and
a feature amount table creation unit for creating a feature amount table used for the searching process, from the feature amount calculated based on the input moving picture for search;

for creating a database,
a moving picture input unit for inputting the moving picture data for database;
a moving picture database registration unit for registering the input moving picture data for database in a moving picture database;
a moving picture database in which the input moving picture data for database is registered;
a feature amount calculation unit including:

a local region extracting unit for extracting one or more square or any given shape local regions for calculating the feature amount with respect to the input moving picture data for database;
a signal extraction unit for extracting or conversion-extracting picture signal components such as brightness signals, color difference signals, each RGB color space component, each XYZ color space component, each uniform color space component, and each Munsell color space component of the feature amount calculation region extracted from the input moving picture for database; and
a feature amount table creation unit for creating a feature amount table used for the searching process, from the feature amount calculated based on.the input moving picture for database;

a table database registration unit for registering the created feature amount table for database in a feature amount table database;
a table database in which the created feature amount table for database is registered;
a search unit including:

a table database read out unit for reading out the database feature amount table used for the searching process upon receipt of a result processed by the feature amount calculation unit on the input moving picture for search;
a matching unit for extracting a feature amount used for matching from the feature amount table created based on the input moving picture for search and the registered feature amount table in the feature amount table for database, outputting the extracted result to a matching result judgment unit, storing the matching result from the matching result judgment unit, and after the completion of the matching process, outputting the matching result to a moving picture database read out unit; and
a matching result judgment unit for performing judgment with respect to a threshold value, based on the feature amount of the moving picture for search and the feature amount of the moving picture for database extracted by the matching unit, and outputting the matching result to the matching unit;

a moving picture database read out unit for receiving the matching result from the matching result judgment unit, and reading out a search result moving picture corresponding to the matching result, from the moving picture database; and
a search result output unit for outputting the search result moving picture read out by the moving picture database read out unit.

2. A system for searching moving pictures according to claim 1, in which, for searching, said feature amount calculation unit further comprises a histogram calculation unit for calculating a histogram of the signal extracted from the input moving picture for search and, in which, for creating the database, said feature amount calculation unit further comprises a histogram calculation unit for calculating a histogram of the signal extracted from the input database registration moving picture.

3. A system for searching moving pictures according to claim 2, in which, for searching, said feature amount calculation unit further comprises a correlation value calculation unit for calculating a correlation value, with respect to the histogram of the signal extracted from the input moving picture for search, between the frames positioned side by side or between any given frames along a lapse of time and, in which, for creating the database, said feature amount calculation unit further comprises a correlation value calculation unit for calculating a correlation value, with respect to the histogram of the signal extracted from the input database registration moving picture, between the frames positioned side by side or between any given frames along a lapse of time.

4. A system for searching moving pictures according to claim 3, in which, for searching, said feature amount calculation unit further comprises a group unit for grouping with a certain threshold value, as the unit of one or more frames in terms of time, the correlation values calculated based on the input moving picture so that the feature amount such as the number of frames and the number of groups is calculated and, in which, for creating the database, said feature amount calculation unit further comprises a group unit for grouping with a certain threshold value, as the unit of one or more frames in terms of time, the correlation values calculated based on the input database registration moving picture so that the feature amount such as the number of frames and the number of groups is calculated.

5. A system for searching moving pictures according to claim 2, in which, for searching, said feature amount calculation unit further comprises a group unit for grouping with a certain threshold value, as the unit of one or more frames in terms of time, the histograms calculated based on the input moving picture so that the feature amount such as the number of frames and the number of groups is calculated and, in which, for creating the database, said feature amount calculation unit further comprises a group unit for grouping with a certain threshold value, as the unit of one or more frames in terms of time, the histograms calculated based on the input database registration moving picture so that the feature amount such as the number of frames and the number of groups is calculated.

6. A system for searching moving pictures according to claim 1, in which, for searching, said feature amount calculation unit further comprises a correlation value calculation unit for calculating a correlation value, with respect to the signal extracted from the input moving picture for search, between the frames positioned side by side or between any given frames along a lapse of time and, in which, for creating the database, said feature amount calculation unit further comprises a correlation value calculation unit for calculating a correlation value, with respect to the signal extracted from the input database registration moving picture, between the frames positioned side by side or between any given frames along a lapse of time.

7. A system for searching moving pictures according to claim 6, in which, for searching, said feature amount calculation unit further comprises a group unit for grouping with a certain threshold value, as the unit of one or more frames in terms of time, the correlation values calculated based on the input moving picture so that the feature amount such as the number of frames and the number of groups is calculated and, in which, for creating the database, said feature amount calculation unit further comprises a group unit for grouping with a certain threshold value, as the unit of one or more frames in terms of time, the correlation values calculated based on the input database registration moving picture so that the feature amount such as the number of frames and the number of groups is calculated.

8. A system for searching moving pictures according to claim 1, in which, for searching, said feature amount calculation unit further comprises a group unit for grouping with a certain threshold value, as the unit of one or more frames in terms of time, the signals extracted from the input moving picture so that the feature amount such as the number of frames and the number of groups is calculated and, in which, for creating the database, said feature amount calculation unit further comprises a group unit for grouping with a certain threshold value, as the unit of one or more frames in terms of time, the signals extracted from the input database registration moving picture so that the feature amount such as the number of frames and the number of groups is calculated.

9. A system for searching moving pictures comprising:

> for searching,
> a moving picture input unit for inputting moving picture data for search;
> a feature amount calculation unit including:
>
>> a signal extraction unit for extracting or conversion-extracting picture signal components such as brightness signals, color difference signals, each RGB color space component, each XYZ color space component, each uniform color space component, and each Munsell color space component of the feature amount calculation region extracted from the input moving picture for search;
>> a histogram calculation unit for calculating a histogram of the signals extracted from the input moving picture for search; and
>> a feature amount table creation unit for creating a feature amount table used for the searching process, from the feature amount calculated based on the input moving picture for search;
>
> for creating a database,
> a moving picture input unit for inputting the moving picture data for database;
> a moving picture database registration unit for registering the input moving picture data for database in a moving picture database;
> a moving picture database in which the input moving picture data for database is registered;
> a feature amount calculation unit including:
>
>> a signal extraction unit for extracting or conversion-extracting picture signal components such as brightness signals, color difference signals, each RGB color space component, each XYZ color space component, each uniform color space component, and each Munsell color space component of the feature amount calculation region extracted from the input database registration moving picture;
>> a histogram calculation unit for calculating a histogram of the signals extracted from the input database registration moving picture; and
>> a feature amount table creation unit for creating a feature amount table used for the searching process, from the feature amount calculated based on the input database registration moving picture;
>
> a table database registration unit for registering the created feature amount table for database in a feature amount table database;

a table database in which the created feature amount table for database is registered;
a search unit including:

a table database read out unit for reading out the database feature amount table used for the searching process upon receipt of a result processed by the feature amount calculation unit on the input moving picture for search;
a matching unit for extracting a feature amount used for matching from the feature amount table created based on the input moving picture for search and the registered feature amount table in the feature amount table for database, outputting the extracted result to a matching result judgment unit, storing the matching result from the matching result judgment unit, and after the completion of the matching process, outputting the matching result to a moving picture database read out unit; and
a matching result judgment unit for performing judgment with respect to a threshold value, based on the feature amount of the moving picture for search and the feature amount of the moving picture for database extracted by the matching unit, and outputting the matching result to the matching unit;

a moving picture database read out unit for receiving the matching result from the matching result judgment unit, and reading out a search result moving picture corresponding to the matching result, from the moving picture database; and
a search result output unit for outputting the search result moving picture read out by the moving picture database read out unit.

10. A system for searching moving pictures according to claim 9, in which, for searching, said feature amount calculation unit further comprises a correlation value calculation unit for calculating a correlation value, with respect to the histogram of the signal extracted from the input moving picture for search, between the frames positioned side by side or between any given frames along a lapse of time and, in which, for creating the database, said feature amount calculation unit further comprises a correlation value calculation unit for calculating a correlation value, with respect to the histogram of the signal extracted from the input database registration moving picture, between the frames positioned side by side or between any given frames along a lapse of time.

11. A system for searching moving pictures according to claim 10, in which, for searching, said feature amount calculation unit further comprises a group unit for grouping with a certain threshold value, as the unit of one or more frames in terms of time, the correlation values calculated based on the input moving picture so that the feature amount such as the number of frames and the number of groups is calculated and, in which, for creating the database, said feature amount calculation unit further comprises a group unit for grouping with a certain threshold value, as the unit of one or more frames in terms of time, the correlation values calculated based on the input database registration moving picture so that the feature amount such as the number of frames and the number of groups is calculated.

12. A system for searching moving pictures according to claim 9, in which, for searching, said feature amount calculation unit further comprises a group unit for grouping with a certain threshold value, as the unit of one or more frames in terms of time, the histograms calculated based on the input moving picture so that the feature amount such as the number of frames and the number of groups is calculated and, in which, for creating the database, said feature amount calculation unit further comprises a group unit for grouping with a certain threshold value, as the unit of one or more frames in terms of time, the histograms calculated based on the input database registration moving picture so that the feature amount such as the number of frames and the number of groups is calculated.

13. A system for searching moving pictures comprising:

for searching,
a moving picture input unit for inputting moving picture data for search;
a feature amount calculation unit including:

a signal extraction unit for extracting or conversion-extracting picture signal components such as brightness signals, color difference signals, each RGB color space component, each XYZ color space component, each uniform color space component, and each Munsell color space component of the feature amount calculation region extracted from the input moving picture for search;
a correlation value calculation unit for calculating a correlation value of the signals extracted from the input moving picture for search, between the frames positioned side by side or between any given frames along a lapse of time; and

a feature amount table creation unit for creating a feature amount table used for the searching process, from the feature amount calculated based on the input moving picture for search;

for creating a database,

a moving picture input unit for inputting the moving picture data for database;

a moving picture database registration unit for registering the input moving picture data for database in a moving picture database;

a moving picture database in which the input moving picture data for database is registered;

a feature amount calculation unit including:

a signal extraction unit for extracting or conversion-extracting picture signal components such as brightness signals, color difference signals, each RGB color space component, each XYZ color space component, each uniform color space component, and each Munsell color space component of the feature amount calculation region extracted from the input database registration moving picture;

a correlation value calculation unit for calculating a correlation value of the signals extracted from the input database registration moving picture between the frames positioned side by side or between any given frames along a lapse of time; and

a feature amount table creation unit for creating a feature amount table used for the searching process, from the feature amount calculated based on the input database registration moving picture;

a table database registration unit for registering the created feature amount table for database in a feature amount table database;

a table database in which the created feature amount table for database is registered;

a search unit including:

a table database read out unit for reading out the database feature amount table used for the searching process upon receipt of a result processed by the feature amount calculation unit on the input moving picture for search;

a matching unit for extracting a feature amount used for matching from the feature amount table created based on the input moving picture for search and the registered feature amount table in the feature amount table for database, outputting the extracted result to a matching result judgment unit, storing the matching result from the matching result judgment unit, and after the completion of the matching process, outputting the matching result to a moving picture database read out unit; and

a matching result judgment unit for performing judgment with respect to a threshold value, based on the feature amount of the moving picture for search and the feature amount of the moving picture for database extracted by the matching unit, and outputting the matching result to the matching unit;

a moving picture database read out unit for receiving the matching result from the matching result judgment unit, and reading out a search result moving picture corresponding to the matching result, from the moving picture database; and

a search result output unit for outputting the search result moving picture read out by the moving picture database read out unit.

14. A system for searching moving pictures according to claim 13, in which, for searching, said feature amount calculation unit further comprises a group unit for grouping with a certain threshold value, as the unit of one or more frames in terms of time, the correlation values calculated based on the input moving picture so that the feature amount such as the number of frames and the number of groups is calculated and, in which, for creating the database, said feature amount calculation unit further comprises a group unit for grouping with a certain threshold value, as the unit of one or more frames in terms of time, the correlation values calculated based on the input database registration moving picture so that the feature amount such as the number of frames and the number of groups is calculated.

15. A system for searching moving pictures comprising:

for searching,

a moving picture input unit for inputting moving picture data for search;

a feature amount calculation unit including:

a signal extraction unit for extracting or conversion-extracting picture signal components such as brightness signals, color difference signals, each RGB color space component, each XYZ color space component, each uniform color space component, and each Munsell color space component of the feature amount calculation region extracted from the input moving picture for search;

a group unit for grouping for grouping with a certain threshold value, as the unit of one or more frames in terms of time, the signals extracted from the input moving picture so that the feature amount such as the number of frames and the number of groups is calculated; and

a feature amount table creation unit for creating a feature amount table used for the searching process, from the feature amount calculated based on the input moving picture for search;

for creating a database,

a moving picture input unit for inputting the moving picture data for database;

a moving picture database registration unit for registering the input moving picture data for database in a moving picture database;

a moving picture database in which the input moving picture data for database is registered;

a feature amount calculation unit including:

a signal extraction unit for extracting or conversion-extracting picture signal components such as brightness signals, color difference signals, each RGB color space component, each XYZ color space component, each uniform color space component, and each Munsell color space component of the feature amount calculation region extracted from the input moving picture for database;

a group unit for grouping for grouping with a certain threshold value, as the unit of one or more frames in terms of time, the signals extracted from the input database registration moving picture so that the feature amount such as the number of frames and the number of groups is calculated; and

a feature amount table creation unit for creating a feature amount table used for the searching process, from the feature amount calculated based on the input database registration moving picture;

a table database registration unit for registering the created feature amount table for database in a feature amount table database;

a table database in which the created feature amount table for database is registered;

a search unit including:

a table database read out unit for reading out the database feature amount table used for the searching process upon receipt of a result processed by the feature amount calculation unit on the input moving picture for search;

a matching unit for extracting a feature amount used for matching from the feature amount table created based on the input moving picture for search and the registered feature amount table in the feature amount table for database, outputting the extracted result to a matching result judgment unit, storing the matching result from the matching result judgment unit, and after the completion of the matching process, outputting the matching result to a moving picture database read out unit; and

a matching result judgment unit for performing judgment with respect to a threshold value, based on the feature amount of the moving picture for search and the feature amount of the moving picture for database extracted by the matching unit, and outputting the matching result to the matching unit;

a moving picture database read out unit for receiving the matching result from the matching result judgment unit, and reading out a search result moving picture corresponding to the matching result, from the moving picture database; and

a search result output unit for outputting the search result moving picture read out by the moving picture database read out unit.

16. A system for searching moving pictures comprising:

for searching,

a moving picture input unit for inputting moving picture data for search;

a feature amount calculation unit including:

a signal extraction unit for extracting or conversion-extracting picture signal components such as brightness signals, color difference signals, each RGB color space component, each XYZ color space component, each uniform color space component, and each Munsell color space component of the feature amount calculation region extracted from the input moving picture for search;

a local region extraction unit for extracting one or more square or any given shape local regions from the input moving picture for search in order to calculate the feature amount; and

a feature amount table creation unit for creating a feature amount table used for the searching process, from the feature amount calculated based on the input moving picture for search;

for creating a database,

a moving picture input unit for inputting the moving picture data for database;

a moving picture database registration unit for registering the input moving picture data for database in a moving picture database;

a moving picture database in which the input moving picture data for database is registered;

a feature amount calculation unit including:

a signal extraction unit for extracting or conversion-extracting picture signal components such as brightness signals, color difference signals, each RGB color space component, each XYZ color space component, each uniform color space component, and each Munsell color space component of the feature amount calculation region extracted from the input database registration moving picture;

a local region extraction unit for extracting one or more square or any given shape local regions from the input database registration moving picture in order to calculate the feature amount; and

a feature amount table creation unit for creating a feature amount table used for the searching process, from the feature amount calculated based on the input database registration moving picture;

a table database registration unit for registering the created feature amount table for database in a feature amount table database;

a table database in which the created feature amount table for database is registered;

a search unit including:

a table database read out unit for reading out the database feature amount table used for the searching process upon receipt of a result processed by the feature amount calculation unit on the input moving picture for search;

a matching unit for extracting a feature amount used for matching from the feature amount table created based on the input moving picture for search and the registered feature amount table in the feature amount table for database, outputting the extracted result to a matching result judgment unit, storing the matching result from the matching result judgment unit, and after the completion of the matching process, outputting the matching result to a moving picture database read out unit; and

a matching result judgment unit for performing judgment with respect to a threshold value, based on the feature amount of the moving picture for search and the feature amount of the moving picture for database extracted by the matching unit, and outputting the matching result to the matching unit;

a moving picture database read out unit for receiving the matching result from the matching result judgment unit, and reading out a search result moving picture corresponding to the matching result, from the moving picture database; and

a search result output unit for outputting the search result moving picture read out by the moving picture database read out unit.

**17.** A system for searching moving pictures according to claim 16, in which, for searching, said feature amount calculation unit further comprises a histogram calculation unit for calculating a histogram of the signal extracted from the input moving picture for search and, in which, for creating the database, said feature amount calculation unit further comprises a histogram calculation unit for calculating a histogram of the signal extracted from the input database registration moving picture.

**18.** A system for searching moving picture according to claim 17, in which, for searching, said feature amount calculation unit further comprises a correlation value calculation unit for calculating a correlation value, with respect to the histogram of the signal extracted from the input moving picture for search, between the frames positioned side by side or between any given frames along a lapse of time and, in which, for creating the database, said feature amount calculation unit further comprises a correlation value calculation unit for calculating a correlation value, with respect to the histogram of the signal extracted from the input database registration moving picture, between the frames positioned side by side or between any given frames along a lapse of time.

**19.** A system for searching moving pictures according to claim 18, in which, for searching, said feature amount calculation unit further comprises a group unit for grouping with a certain threshold value, as the unit of one or more frames in terms of time, the correlation values calculated based on the input moving picture so that the feature amount such as the number of frames and the number of groups is calculated and, in which, for creating the database, said feature amount calculation unit further comprises a group unit for grouping with a certain threshold value, as the unit of one or more frames in terms of time, the correlation values calculated based on the input database registration moving picture so that the feature amount such as the number of frames and the number of groups is calculated.

**20.** A system for searching moving pictures according to claim 17, in which, for searching, said feature amount calculation unit further comprises a group unit for grouping with a certain threshold value, as the unit of one or more frames in terms of time, the histograms calculated based on the input moving picture so that the feature amount such as the number of frames and the number of groups is calculated and, in which, for creating the database, said feature amount calculation unit further comprises a group unit for grouping with a certain threshold value, as the unit of one or more frames in terms of time, the histograms calculated based on the input database registration moving picture so that the feature amount such as the number of frames and the number of groups is calculated.

**21.** A system for searching moving pictures according to claim 16, in which, for searching, said feature amount calculation unit further comprises a correlation value calculation unit for calculating a correlation value, with respect to the signal extracted from the input moving picture for search, between the frames positioned side by side or between any given frames along a lapse of time and, in which, for creating the database, said feature amount calculation unit further comprises a correlation value calculation unit for calculating a correlation value, with respect to the signal extracted from the input database registration moving picture, between the frames positioned side by side or between any given frames along a lapse of time.

**22.** A system for searching moving pictures according to claim 21, in which, for searching, said feature amount calculation unit further comprises a group unit for grouping with a certain threshold value, as the unit of one or more frames in terms of time, the correlation values calculated based on the input moving picture for search so that the feature amount such as the number of frames and the number of groups is calculated and, in which, for creating the database, said feature amount calculation unit further comprises a group unit for grouping with a certain threshold value, as the unit of one or more frames in terms of time, the correlation values calculated based on the input database registration moving picture so that the feature amount such as the number of frames and the number of groups is calculated.

**23.** A system for searching moving pictures according to claim 16, in which, for searching, said feature amount calculation unit further comprises a group unit for grouping with a certain threshold value, as the unit of one or more frames in terms of time, the signals extracted from the input moving picture so that the feature amount such as the number of frames and the number of groups is calculated and, in which, for creating the database, said feature amount calculation unit further comprises a group unit for grouping with a certain threshold value, as the unit of one or more frames in terms of time, the signals extracted from the input database registration moving picture so that the feature amount such as the number of frames and the number of groups is calculated.

# Fig. 1

1

FEATURE AMOUNT
CALCULATION

INPUT MOVING PICTURE FOR SEARCH

2

MATCHING PROCESS
MATCHING JUDGMENT

FEATURE AMOUNT TABLE
CREATED FROM INPUT
MOVING PICTURE
FOR SEARCH

3

FEATURE AMOUNT TABLE
CREATED FROM DATABASE
REGISTRATION MOVING
PICTURE

OUTPUT OF SEARCH
RESULT MOVING PICTURE

READ OUT OF SEARCH
RESULT MOVING PICTURE

4

MOVING PICTURE DATABASE

5

SEARCH RESULT MOVING PICTURE

# Fig. 2

12

MEMORY
(INTERNAL STORAGE
UNIT)

6

7

MOUSE
(INPUT DEVICE)

8

9

CENTRAL
PROCESSING UNIT

10

COLOR DISPLAY
(DISPLAY UNIT)

INPUT AND OUTPUT INTERFACE

EXTERNAL
STORAGE
UNIT

11

# Fig. 3

# Fig. 4

n frame

n+1 frame

# Fig. 5

# Fig. 6

1 FRAME OF MOVING PICTURE
FOR SEARCH

LOCAL REGION
EXTRACTION UNIT

LOCAL REGION
EXTRACTION

# Fig. 7

(EXAMPLE)

i)   X Y Z                          i)      X

ii)  R G B                          ii)     R

iii) Y Cb Cr                        iii)    Y

iv)  Y Cb Cr                        iv)     R G B

INPUT SIGNAL                        EXTRACTION SIGNAL

SIGNAL
EXTRACTION
UNIT

# Fig. 8

GROUP

| H | L | H | L | H | L | H |

SIGNAL AMPLITUDE, HISTOGRAM, CORRELATION VALUE

THRESHOLD VALUE Th1

TIME (NUMBER OF FRAMES)

# Fig. 9

GROUP

| A | B | C | D | B | C | A |

SIGNAL AMPLITUDE, HISTOGRAM, CORRELATION VALUE

THRESHOLD VALUE Th1

THRESHOLD VALUE Th2

THRESHOLD VALUE Th3

TIME (NUMBER OF FRAMES)

# Fig. 10

# Fig. 11

START

INPUT OF MOVING PICTURE FOR SEARCH — 101

SKIP OF LOCAL REGION EXTRACTION UNIT — 102
Yes
No

LOCAL REGION EXTRACTION OF MOVING PICTURE FOR SEARCH — 103

SIGNAL EXTRACTION — 104

SKIP OF HISTOGRAM CALCULATION UNIT — 105
Yes
No

CALCULATION OF HISTOGRAM OF EXTRACTED SIGNAL — 106

SKIP OF CORRELATION VALUE CALCULATION UNIT — 107
Yes
No

CALCULATION OF CORRELATED VALUE — 108

SKIP OF GROUPING UNIT — 109
Yes
No

GROUPING OF CORRELATION VALUE — 110

CREATION OF FEATURE AMOUNT TABLE — 111

DATABASE SIDE

*

112 — READ OUT OF FEATURE AMOUNT TABLE FROM FEATURE AMOUNT TABLE DATABASE

EXTRACTION OF TARGET FEATURE AMOUNT IN TABLE

113

MATCHING IN JUDGMENT FORMULA — No
114
Yes

115 — STORING OF RESULT

END OF MATCHING PROCESS — No
116
Yes

117 — READ OUT OF MOVING PICTURE FROM MOVING PICTURE DATABASE

118 — OUTPUT OF RESULTED PICTURE

END

# Fig. 12

```
                    ┌──────────┐
                    │  START   │
                    └────┬─────┘
                         ▼
        ┌────────────────────────────────┐
        │   INPUT OF MOVING PICTURE       │─── 201
        │        FOR DATABASE             │
        └────────────────┬───────────────┘
                         ▼
        ┌────────────────────────────────┐
        │  REGISTRATION OF MOVING PICTURE IN │── 202
        │   MOVING PICTURE DATABASE       │
        └────────────────┬───────────────┘
                         ▼
   Yes          ◇ SKIP OF LOCAL REGION ◇────── 203
   ◄────────────   EXTRACTION UNIT
                         │ No
                         ▼
        ┌────────────────────────────────┐
        │   LOCAL REGION EXTRACTION       │── 204
        │  OF MOVING PICTURE FOR SEARCH   │
        └────────────────┬───────────────┘
                         ▼
        ┌────────────────────────────────┐
        │      SIGNAL EXTRACTION          │── 205
        └────────────────┬───────────────┘
                         ▼
   Yes          ◇ SKIP OF ◇
   ◄────────── HISTOGRAM CALCULATION ───── 206
                   UNIT
                         │ No
                         ▼
        ┌────────────────────────────────┐
        │  CALCULATION OF HISTOGRAM OF    │── 207
        │       EXTRACTED SIGNAL          │
        └────────────────┬───────────────┘
                         ▼
   Yes          ◇ SKIP OF CORRELATION VALUE ◇── 208
   ◄──────────    CALCULATION UNIT
                         │ No
                         ▼
        ┌────────────────────────────────┐
        │      CALCULATION OF             │── 209
        │     CORRELATION VALUE           │
        └────────────────┬───────────────┘
                         ▼
   Yes          ◇ SKIP OF GROUPING UNIT ◇───── 210
   ◄──────────
                         │ No
                         ▼
        ┌────────────────────────────────┐
        │  GROUPING OF CORRELATION VALUE  │── 211
        └────────────────┬───────────────┘
                         ▼
        ┌────────────────────────────────┐
        │  CREATION OF FEATURE AMOUNT TABLE │── 212
        └────────────────┬───────────────┘
                         ▼
        ┌────────────────────────────────┐
        │  REGISTRATION OF FEATURE AMOUNT │── 213
        │    TABLE IN FEATURE AMOUNT      │
        │        TABLE DATABASE           │
        └────────────────┬───────────────┘
                         ▼
                    ┌──────────┐
                    │   END    │
                    └──────────┘
```

# Fig. 13

```
┌─────────────────────┐    ┌──────────────────────────────┐
│ MOVING PICTURE FOR  │    │ MOVING PICTURE FOR DATABASE  │
│  SEARCH INPUT UNIT  │    │          INPUT UNIT          │
└─────────────────────┘    └──────────────────────────────┘
```

FEATURE AMOUNT          FEATURE AMOUNT
CALCULATION UNIT        CALCULATION UNIT

```
┌─────────────────┐    ┌─────────────────┐
│     SIGNAL      │    │     SIGNAL      │
│ EXTRACTION UNIT │    │ EXTRACTION UNIT │
└─────────────────┘    └─────────────────┘

┌─────────────────┐    ┌─────────────────┐
│  LOCAL REGION   │    │  LOCAL REGION   │
│ EXTRACTION UNIT │    │ EXTRACTION UNIT │
└─────────────────┘    └─────────────────┘

┌─────────────────┐    ┌─────────────────┐
│    HISTOGRAM    │    │    HISTOGRAM    │
│ CALCULATION UNIT│    │ CALCULATION UNIT│
└─────────────────┘    └─────────────────┘

┌─────────────────┐    ┌─────────────────┐
│ CORRELATION VALUE│   │ CORRELATION VALUE│
│ CALCULATION UNIT│    │ CALCULATION UNIT│
└─────────────────┘    └─────────────────┘

┌─────────────────┐    ┌─────────────────┐
│  GROUPING UNIT  │    │  GROUPING UNIT  │
└─────────────────┘    └─────────────────┘

┌─────────────────┐    ┌─────────────────┐
│ FEATURE AMOUNT  │    │ FEATURE AMOUNT  │
│ TABLE CREATION  │    │ TABLE CREATION  │
│      UNIT       │    │      UNIT       │
└─────────────────┘    └─────────────────┘
```

MOVING PICTURE
DATABASE
REGISTRATION UNIT

TABLE DATABASE REGISTRATION UNIT

DATABASE
FOR
TABLE

SEARCH UNIT

TABLE DATABASE READ OUT UNIT

MATCHING UNIT

MATCHING RESULT
JUDGMENT UNIT

MOVING PICTURE DATABASE
READ OUT UNIT

MOVING
PICTURE
DATABASE

SEARCH RESULT
OUTPUT UNIT

# Fig. 14

START

INPUT OF MOVING PICTURE FOR SEARCH — 301

SIGNAL EXTRACTION — 302

SKIP OF LOCAL REGION EXTRACTION UNIT — 303
Yes / No

LOCAL REGION EXTRACTION OF MOVING PICTURE FOR SEARCH — 304

SKIP OF HISTOGRAM CALCULATION UNIT — 305
Yes / No

CALCULATION OF HISTOGRAM OF EXTRACTED SIGNAL — 306

SKIP OF CORRELATION VALUE CALCULATION UNIT — 307
Yes / No

CALCULATION OF CORRELATED VALUE — 308

SKIP OF GROUPING UNIT — 309
Yes / No

GROUPING OF CORRELATION VALUE — 310

CREATION OF FEATURE AMOUNT TABLE — 311

DATABASE SIDE
*

312 — READ OUT OF FEATURE AMOUNT TABLE FROM FEATURE AMOUNT TABLE DATABASE

EXTRACTION OF TARGET FEATURE AMOUNT IN TABLE

313

MATCHING IN JUDGMENT FORMULA — No
314
Yes

315 — STORING OF RESULT

END OF MATCHING PROCESS — No
316
Yes

317 — READ OUT OF MOVING PICTURE FROM MOVING PICTURE DATABASE

318 — OUTPUT OF RESULTED PICTURE

END

# Fig. 15

START

INPUT OF MOVING PICTURE FOR DATABASE — 401

REGISTRATION OF MOVING PICTURE IN MOVING PICTURE DATABASE — 402

SIGNAL EXTRACTION — 403

SKIP OF LOCAL REGION EXTRACTION UNIT — 404
Yes / No

LOCAL REGION EXTRACTION OF MOVING PICTURE FOR SEARCH — 405

SKIP OF HISTOGRAM CALCULATION UNIT — 406
Yes / No

CALCULATION OF HISTOGRAM OF EXTRACTED SIGNAL — 407

SKIP OF CORRELATION VALUE CALCULATION UNIT — 408
Yes / No

CALCULATION OF CORRELATION VALUE — 409

SKIP OF GROUPING UNIT — 410
Yes / No

GROUPING OF CORRELATION VALUE — 411

CREATION OF FEATURE AMOUNT TABLE — 412

REGISTRATION OF FEATURE AMOUNT TABLE IN FEATURE AMOUNT TABLE DATABASE — 413

END

**EP 1 477 933 A1**

## INTERNATIONAL SEARCH REPORT

| | International application No. |
|---|---|
| | PCT/JP03/00709 |

**A. CLASSIFICATION OF SUBJECT MATTER**
Int.Cl$^7$  G06T7/00, H04N5/76

According to International Patent Classification (IPC) or to both national classification and IPC

**B. FIELDS SEARCHED**

Minimum documentation searched (classification system followed by classification symbols)
Int.Cl$^7$  G06T7/00-7/60, H04N5/76

Documentation searched other than minimum documentation to the extent that such documents are included in the fields searched
| | | | |
|---|---|---|---|
| Jitsuyo Shinan Koho | 1926–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | Hidekazu TAKAHASHI et al., "Jikan Tokuchoryo ni yoru Dogazo Kensaku Shuho no Kaiseki", ITE Technical Report, 15 December, 2000 (15.12.00), Vol.24, No.79, pages 61 to 65. Pages 62 to 63 | 1-23 |
| X | Hidekazu TAKAHASHI et al., "Kido Bunpu no Sokan to Iro Kukan Joho o Riyo shita Dogazo Kensaku Hoshiki no Kento", Information Processing Society of Japan Kenkyu Hokoku, 03 March, 2000 (03.03.00), Vol.2000, No.24, pages 7 to 12. Page 8 | 1-23 |
| X | Akira KODAMA et al., "Kido Bunpu no Sokan o Mochiita Dogazo Kensaku Shuho no Kento", ITE Technical Report, 17 December, 1999 (17.12.99), Vol.23, No.80, pages 73 to 78. Pages 74 to 75 | 1-23 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 April, 2003 (02.04.03) | 15 April, 2003 (15.04.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**EP 1 477 933 A1**

## INTERNATIONAL SEARCH REPORT

International application No.

PCT/JP03/00709

**C (Continuation).  DOCUMENTS CONSIDERED TO BE RELEVANT**

| Category* | Citation of document, with indication, where appropriate, of the relevant passages | Relevant to claim No. |
|---|---|---|
| P,X | JP 2002-117407 A  (Satake Corp.),<br>19 April, 2002 (19.04.02), | 1,6-8,13-16,<br>21-23 |
| P,A | & FR 2815151 A1 | 2-5,9-12,<br>17-20 |

Form PCT/ISA/210 (continuation of second sheet) (July 1998)

29